(19) Europäisches Patentamt
European Patent Office
Office européen des brevets

(11) Veröffentlichungsnummer: **0 338 550**
**A2**

(12) # EUROPÄISCHE PATENTANMELDUNG

(21) Anmeldenummer: 89107102.9

(22) Anmeldetag: 20.04.89

(51) Int. Cl.4: C08G 59/50

(30) Priorität: 22.04.88 DE 3813719

(43) Veröffentlichungstag der Anmeldung: 25.10.89 Patentblatt 89/43

(84) Benannte Vertragsstaaten: BE CH DE ES FR GB IT LI NL

(71) Anmelder: WACKER-CHEMIE GMBH
Prinzregentenstrasse 22
D-8000 München 22(DE)

(72) Erfinder: Herzig, Christian, Dr. Dipl.-Chem.
Schröckenbauer 1
D-8221 Taching(DE)
Erfinder: Deubzer, Bernward, Dr. Dipl.-Chem.
Virchowstrasse 14
D-8263 Burghausen(DE)
Erfinder: Esterbauer, Josef
Unterweitzberg 34
A-5122 Hochburg(AT)

(54) **Verfahren zur Herstellung von wärmebeständigen, vernetzten Epoxyharzen.**

(57) Wärmebeständige, vernetzte Epoxyharze werden erhalten, indem Epoxyharz im wesentlichen mittels Siliciumverbindung mit über Kohlenstoff an Silicium gebundenem, basischem Stickstoff, an den mindestens 1 Wasserstoffatom direkt gebunden ist, vernetzt wird und anschließend das vernetzte Epoxyharz getempert wird.

EP 0 338 550 A2

## Verfahren zur Herstellung von wärmebeständigen, vernetzten Epoxyharzen

Die Vernetzung von Epoxydharz bei Raumtemperatur mittels Siliciumverbindung mit über Kohlenstoff an Silicium gebundenem, basischem Stickstoff, an den mindestens 1 Wasserstoffatom direkt gebunden ist, ist bereits bekannt. Hierzu wird z.B. auf US 4 413 104 (ausgegeben 01. Nov. 1983, B. Deubzer et al., Wacker-Chemie GmbH), Beispiel 1, Absatz 2, verwiesen. In DE-AS 1 125 171 (ausgegeben 8. März 1962, E. Griebsch et al, Schering AG) sind als Härtungsmittel für Epoxyharze Siliciumverbindungen mit SiOC-gebundenem, basischem Stickstoff, an den mindestens 1 Wasserstoffatom direkt gebunden ist, beschrieben, wobei die Härtung gemäß Bespiel 2 durch Erhitzen erfolgt.

Es bestand die Aufgabe solche vernetzten Epoxyharze herzustellen, die wärmebeständig sind, d.h. ihre Oberflächenhärte und mechanische Formbeständigkeit auch beim Erhitzen nahezu unverändert beibehalten.

Gegenstand der Erfindung ist ein Verfahren zur Herstellung von wärmebeständigen vernetzten Epoxyharzen, dadurch gekennzeichnet, daß Epoxyharz im wesentlichen mittels Siliciumverbindung mit über Kohlenstoff an Silicium gebundenem, basischem Stickstoff, an den mindestens 1 Wasserstoffatom direkt gebunden ist, vernetzt wird und anschließend das vernetzte Epoxyharz getempert wird.

Die bei dem erfindungsgemäßen Verfahren eingesetzten Epoxyharze können beliebige Epoxyharze sein, die auch bisher zur Herstellung vernetzter Epoxyharze verwendet wurden. Derartige Epoxyharze sind bereits bekannt, z.B. aus Kirk-Othmer, Encyclopedia of Chemical Technology, 3. Auflage, Band 9, Seiten 267 bis 290. Sie brauchen daher nicht näher beschrieben zu werden. Besonders bevorzugt enthalten die Epoxyharzform- massen als mindestens einen Teil vom Epoxyharz mindestens ein Umsetzungsprodukt aus 2,2-Bis-(4-hydroxyphenyl)-propan (Bisphenol A) und Epichlorhydrin, also der Verbindung der Formel

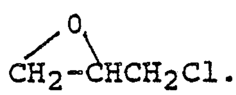

Weitere Beispiele für bei dem erfindungsgemäßen Verfahren bevorzugt eingesetzte Epoxyharze sind Triglycidylisocyanurat, Umsetzungsprodukte aus Bis-(4-hydroxy-phenyl)-methan (Bisphenol F) und Epichlorhydrin sowie Phenol- und Kresolnovolake.

Die Epoxydharze können durch Umsetzung mit Organosiliciumverbindungen, wie dem Silan der Formel

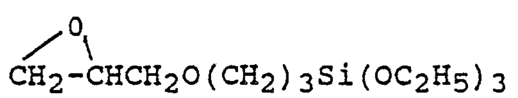 ,

oder mit hydroxy- und/oder alkoxygruppenhaltigen Organopolysiloxanen modifiziert sein.

Vorzugsweise sind die Siliciumverbindungen mit über Kohlenstoff an Silicium gebundenem, basischem Stickstoff, an den mindestens 1 Wasserstoffatom direkt gebunden ist, Organopolysiloxane aus Einheiten der Formel

$$Y_aR_bSi(OR^1)_cO_{\frac{4-a-b-c}{2}} ,$$

worin R gleiche oder verschiedene einwertige Kohlenwasserstoffreste mit 1 bis 8 Kohlenstoffatom(en) je Rest, $R^1$ gleiche oder verschiedene Alkylgruppen mit 1 bis 4 Kohlenstoffatom(en) je Rest und Y gleiche oder verschiedene, einwertige SiC-gebundene organische Reste mit basischem Stickstoff, an den mindestens 1 Wasserstoffatom direkt gebunden ist, bedeuten und a 0 oder 1, durchschnittlich 0,02 bis 1,0, b 0, 1, 2 oder 3, durchschnittlich 0,0 bis 2,0 und c 0, 1, 2 oder 3, durchschnittlich 0,0 bis 2,0 ist.

Die Siliciumverbindungen mit über Kohlenstoff an Silicium gebundenem, basischem Stickstoff, an den mindestens 1 Wasserstoffatom direkt gebunden ist, können aber auch z.B. Silane der Formel
$YR_dSi(OR^1)_{3-d}$ ,
worin Y, R und $R^1$ jeweils die oben dafür angegebene Bedeutung haben, und d 0, 1 oder 2 ist, Silcarbane der Formel
$Y(OR^1)_2Si(CH_2)_2Si(OR^1)_2Y$ ,

worin Y und $R^1$ jeweils die oben dafür angegebene Bedeutung haben, oder Umsetzungsprodukte von mindestens einer Verbindung aus mindestens einer der drei vorstehend angegebenen Klassen von Siliciumverbindungen mit über Kohlenstoff an Silicium gebundenem basischem Stickstoff, an den mindestens 1 Wasserstoffatom direkt gebunden ist, und Kohlenwasserstoffdiolen mit 2 bis 15 Kohlenstoffatomen je Molekül, wie Diethylenglykol, Bisphenol A oder Bisphenol F, Kohlenwasserstofftriolen, wie Glycerin, oder alkoholische Hydroxylgruppen aufweisenden rein-organischen Polymerisaten, wie Hydroxypolyestern, Hydroxypolyethern, Hydroxypolyacrylaten oder Hydroxypolyurethanen, sein.

Vorzugsweise enthalten die vorstehend genannten Umsetzungsprodukte durchschnittlich mindestens 1 Siliciumatom mit über Kohlenstoff daran gebundenem, basischem Stickstoff, an den mindestens 1 Wasserstoffatom direkt gebunden ist, je 3000 g Umsetzungsprodukt, insbesondere je 1500 g Umsetzungsprodukt.

Beispiele für Kohlenwasserstoffreste R sind der Methyl-, Ethyl-, n-Propyl-, Isopropyl- und 2-Ethylhexylrest, sowie Butylreste; aus Kohlenstoff- und Wasserstoffatomen aufgebaute Reste mit aliphatischer Mehrfachbindung, wie der Vinyl- und Allylrest; cycloaliphatische Kohlenwasserstoffreste, wie der Cyclopentylrest und Cyclohexylrest, sowie Methylcyclohexylreste; aromatische Kohlenwasserstoffreste, wie der Phenylrest und Xenylreste; Alkarylreste, wie Tolylreste; und Aralkylreste, wie der Benzylrest. Vorzugsweise sind Kohlenwasserstoffreste R, insbesondere wenn sie an Siliciumatome, an die auch über Kohlenstoff basischer Stickstoff mit direkt daran gebundenem Wasserstoff gebunden ist, gebunden sind, jedoch frei von aliphatischen Mehrfachbindungen. Schon wegen der leichteren Zugänglichkeit ist weiterhin bevorzugt, daß mindestens 50 % der Anzahl der Reste R Methylreste sind.

Die oben genannten Beispiele für Alkylreste R mit 1 bis 4 Kohlenstoffatom(en) je Rest gelten im vollen Umfang auch für die Reste $R^1$.

Vorzugsweise sind die Reste Y solche der Formel

$R^2NHR^3$-,

worin $R^2$ Wasserstoff oder gleiche oder verschiedene Alkyl-oder Cycloalkyl- oder Aminoalkylreste mit 1 bis 8 Kohlenstoffatomen je Rest und $R^3$ gleiche oder verschiedene geradkettige oder verzweigte von aliphatischen Mehrfachbindungen freie Kohlenwasserstoffreste mit einem Kohlenstoffatom oder 3 oder 4 Kohlenstoffatomen je Rest, insbesondere den Rest der Formel

$-(CH_2)_3-$

bedeutet.

Die Beispiele für Alkyl- und Cycloalkylreste R gelten im vollen Umfang auch für Alkyl- bzw. Cycloalkylreste $R^2$.

Beispiele für Aminoalkylreste $R^2$ sind solche der Formel

$H_2N(CH_2)_3-$

$H_2N(CH_2)_2NH(CH_2)_2-$

$H_2N(CH_2)_2-$

$(H_3C)_2NH(CH_2)_2-$

$H_2N(CH_2)_4-$

$H(NHCH_2CH_2)_3-$ und

$C_4H_9NH(CH_2)_2NH(CH_2)_2-$.

Besonders bevorzugt ist a durchschnittlich 0,05 bis 0,4, b durchschnittlich 0,5 bis 1,5 und c durchschnittlich 0,1 bis 1,0.

Die erfindungsgemäß zu vernetzenden Epoxyformmassen können eine Art von Siliciumverbindung mit über Kohlenstoff an Silicium gebundenem, basischem Stickstoff, an den mindestens 1 Wasserstoffatom direkt gebunden ist, oder ein Gemisch aus mindestens zwei verschiedenen Arten derartiger Siliciumverbindungen enthalten.

Vorzugsweise enthalten die erfindungsgemäß zu vernetzenden Epoxyformmassen Siliciumverbindung mit über Kohlenstoff an Silicium gebundenem basischem Stickstoff, an den mindestens 1 Wasserstoffatom direkt gebunden ist, in Mengen von 5 bis 90 Gewichtsprozent, insbesondere 25 bis 70 Gewichtsprozent, jeweils bezogen auf das Gesamtgewicht aller anderen Harze als solchen mit Kohlenstoff an Silicium gebundenem, basischem Stickstoff, an den mindestens 1 Wasserstoffatom gebunden ist.

Weiterhin ist bevorzugt, daß 0,8 bis 1,5, insbesondere 1,0 bis 1,3 direkt an Stickstoff gebundene Wasserstoffatome je Epoxygruppe vorliegen.

Zusätzlich zu Epoxydharz und Siliciumverbindung mit über Kohlenstoff an Silicium gebundenem, basischem Stickstoff, an den mindestens 1 Wasserstoffatom direkt gebunden ist, können die erfindungsgemäß zu vernetzenden Epoxyformmassen herkömmliche Bestandteile enthalten. Beispiele für solche Bestandteile sind handelsübliche Vernetzer für Epoxydharze, wie Amino- oder Aminoamidverbindungen, die von Siliciumatomen frei sind, z.B. Melaminharze, Lösungsmittel, z.B. Methylethylketon, Methylisobutylketon, Ethylenglykol oder Xylolisomerengemische oder Gemische aus mindestens zwei derartiger Lösungsmittel,

Härtungskatalysatoren, wie Tetrabutyltitanat oder Aluminiumtris-(acetylacetonat), Pigmente, wie Titandioxid, Verlaufshilfsstoffe und Streckmittel.

Bei dem erfindungsgemäßen Verfahren werden vor der Vernetzung Epoxyharz getrennt von Verbindung mit basischem Stickstoff an den mindestens 1 Wasserstoffatom direkt gebunden ist, aufbewahrt. Zur Vernetzung werden Epoxyharz und Verbin dung mit basischem Stickstoff, an den mindestens 1 Wasserstoffatom direkt gebunden ist, miteinander vermischt. Nach dem Vermischen dieser beiden Komponenten, wobei Mischungen erhalten werden, die niedriger viskos sind als solche, die Aminoamide als Vernetzungsmittel enthalten, erfolgt die Vernetzung der Zusammensetzungen bei Raumtemperatur innerhalb weniger Tage. Die Vernetzung kann durch Erwärmen auf Temperaturen von 40 °C bis 120 °C beschleunigt werden.

Anschließend an die Vernetzung werden die vernetzten Epoxyharze getempert. Die Temperung erfolgt vorzugsweise bei 150 °C bis 250 °C, insbesondere 180 °C bis 250 °C und besonders bevorzugt 200 °C bis 250 °C über einen Zeitraum von vorzugsweise mindestens 2 Stunden, besonders bevorzugt mindestens 4 Stunden. Die Temperung kann dabei auch während des technischen Gebrauchs der vernetzten Epoxyharze erfolgen.

Die getemperten, vernetzten Epoxyharze weisen beim Erhitzen auf Temperaturen bis zu 200 °C, beziehungsweise auch bei Lagerung bei 150 °C bis 200 °C eine nahezu unveranderte Oberflächenhärte auf, während die Oberflächenhärte von mit herkömmlichen Aminoamiden vernetzten Epoxyharze, die anschließend an die Vernetzung getempert wurden, bei Wärmebehandlung deutlich abfällt.

Die nach dem erfindungsgemäßen Verfahren hergestellten wärmebeständigen, vernetzten Epoxyharze weisen nicht nur eine nahezu gleichbleibende Oberflächenhärte bei Wärmebehandlung auf, sondern sind auch besonders feuchtigkeitsbeständig, d.h., zeigen nur eine geringe Wasseraufnahme im Vergleich mit den mit herkömmlichen Aminoamiden vernetzten Epoxyharzen, die anschließend an die Vernetzung getempert wurden.

Die erfindungsgemäß hergestellten wärmebeständigen, vernetzten Epoxyharze lassen sich ebenso in der Elektrotechnik als Träufelharz für Motoren und Isolatoren einsetzen, als auch als Beschichtungen von thermisch stark beanspruchten Druckwalzen und als Gießharze.

In den folgenden Beispielen beziehen sich alle Angaben von Prozentsätzen auf das Gewicht, soweit nichts anderes angegeben ist.

**Beispiel 1:**

a) 472 g einer 75 %-igen Lösung eines 2,4 % Si-gebundene Hydroxylgruppen enthaltenden Organopolysiloxans mit einem Verhältnis von SiC-gebundenen organischen Resten zu Siliciumatomen von 1,46 : 1,0, wobei 37 % der Anzahl dieser Reste Phenylreste sind, während die übrigen SiC-gebundenen organischen Reste Methylreste sind, in einem handelsüblichen Xylolisomeren-Gemisch werden mit 180 g N-(2-Aminoethyl)-3-aminopropyltrimethoxysilan vermischt. Die so erhaltene Mischung wird 3 Stunden auf 100 °C erwärmt. Anschließend werden bei 150 °C und 1 hPa (abs.) die unter diesen Bedingungen siedenden Bestandteile des Reaktionsgemisches abdestilliert. Es wird als Rückstand ein Organopolysiloxan mit einer Viskosität von 2,2 Pa.s bei 25 °C und einer Basizität von 3,13 mval/g erhalten. Das so erhaltene Organopolysiloxan hat die Formel

$$[H_2N(CH_2)_2NH(CH_2)_3]_{a'}(CH_3)_{b'}(C_6H_5)_{b''}Si(OCH_3)_{c'}O_{\frac{4-a'-b'-b''-c'}{2}}$$

worin

| | |
|---|---|
| a′ durchschnittlich | 0,2 |
| b′ " | 0,7 |
| b″ " | 0,4 |
| c′ " | 0,4 |

ist.

b) 42 g eines handelsüblichen Umsetzungsprodukts aus 2,2-Bis-(4-hydroxylphenyl)-propan und Epichlorhydrin mit einem Equivalentgewicht von 200 werden mit 47 g des Organopolysiloxans, dessen Herstellung oben unter a) beschrieben wurde, vermischt. Aus der Mischung werden Probekörper gegossen,

die 4 Stunden bei 120° C gehärtet und anschließend weitere 4 Stunden bei 200° C getempert werden. Nach der Temperung weist das getemperte, vernetzte Epoxyharz folgende Werte für die Shore D-Härte, ermittelt nach DIN 53 505 auf:

| | |
|---|---|
| Shore D bei 25° C: | 84 |
| Shore D bei 200° C: | 52 |

Vor der Temperung beträgt die Shore D-härte des vernetzten Epoxyharzes bei 200° C lediglich ≪ 30.

**Vergleichsversuch 1:**

47,5 g eines handelsüblichen Umsetzungsprodukts aus 2,2-Bis-(4-hydroxyphenyl)-propan und Epichlorhydrin mit einem Equivalentgewicht von 190 werden mit 9,0 g o-Kieselsäuretetra-ß-aminoethylester mit einem N-H-Equivalent 36, dessen Herstellung in Beispiel 1 der eingangs erwähnten DE-AS 11 25 171 beschrieben ist, vermischt. Aus der Mischung werden Probekörper gegossen, die 5 Stunden bei 80° C gehärtet und anschließend weitere 6 Stunden bei 200° C getempert werden. Nach der Temperung weist das getemperte, vernetzte Epoxyharz folgende Werte für die Shore D-Härte, ermittelt nach DIN 53 505 auf:

| | |
|---|---|
| Shore D bei 25° C: | 84 |
| Shore D bei 200° C: | ≪30 |

Die Shore D-Härte nimmt bei 200° C stark ab.

**Beispiel 2:**

73 g Umsetzungsprodukt aus 2,2-Bis-(4-hydroxyphenyl)-propan und Epichlorhydrin mit einem Equivalentgewicht von 185 bis 220 (Epikote 215 der Fa. Shell) werden mit 82 g des Organopolysiloxans, dessen Herstellung in Beispiel 1 unter a) beschrieben wurde, vermischt. Die Mischung wird 4 Stunden bei 120° C gehärtet und anschliessend bei 200° C getempert. Folgende Erweichungstemperaturen, bestimmt nach DIN 53 460 werden für das getemperte, vernetzte Epoxyharz ermittelt:

| | Erweichungstemperatur |
|---|---|
| Temperung bei 200°C 4 Stunden: | 105°C |
| Temperung bei 200°C 8 Stunden: | 153°C |
| Temperung bei 200°C 24 Stunden: | <185°C. |

**Beispiel 3:**

a) Die in Beispiel 1 unter a) beschriebene Arbeitsweise wird wiederholt mit den Abänderungen, daß anstelle der 472 g des Organopolysiloxans ein Gemisch aus 495 g eines 14 % Si-gebundene Methoxygruppen enthaltenden Organopolysiloxans mit einem Verhältnis von SiC-gebundenen organischen Resten zu Siliciumatomen von 1,36 : 1,0, wobei 46 % der Anzahl dieser Reste Phenylreste sind, während die übrigen Reste Methylreste sind, und 660 g einer 75 %-igen Lösung eines 2,4 % Si-gebundene Hydroxylgruppen enthaltenden Organopolysiloxans mit einem Verhältnis von SiC-gebundenen organischen Resten zu Siliciumatomen von 1,46: 1,0, wobei 37 % der Anzahl dieser Reste Phenylreste sind, während die übrigen SiC-gebundenen organischen Reste Methylreste sind, in einem handelsüblichen Xylolisomeren-Gemisch und anstelle der 180 g N-(2-Aminoethyl)-3-aminopropyltrimethoxysilan 133 g N-(2-Aminoethyl)-3-aminopropyltrimethoxysilan eingesetzt werden.

Es werden 1115 g eines Organopoylsiloxans mit einer Flüchtigkeit von 2,0 % beim einstündigen

Destillieren bei 150 °C und 1 hPa (abs.) erhalten. Das so erhaltene Organopolysiloxan hat eine Viskosität von 4,7 Pa.s bei 25 °C, eine Basizität von 1,09 mval/g und hat folgende Formel

$$[H_2N(CH_2)_2NH(CH_2)_3]_{a'}(CH_3)_{b'}(C_6H_5)_{b''}Si(OCH_3)_{c'}O_{\frac{4-a'-b'-b''-c'}{2}}$$

worin

| | |
|---|---|
| a' durchschnittlich | 0,06 |
| b' " | 0,79 |
| b'' " | 0,55 |
| c' " | 0,44 |

ist.

b) 20 g Umsetzungsprodukt aus 2,2-Bis-(4-hydroxyphenyl)-propan und Epichlorhydrin mit einem Equivalentgewicht von 185 bis 220 (Epikote 215 der Fa. Shell) werden mit 61 g des Organopolysiloxans, dessen Herstellung oben unter a) beschrieben wurde, vermischt. Die Mischung wird 4 Stunden bei 120 °C gehärtet und anschließend weitere 24 Stunden bei 200 °C getempert. Folgende Erweichungstemperatur, ermittelt nach DIN 53 460 werden für das getemperte, vernetzte Epoxyharz bestimmt:

Temperung bei 200 °C 24 Stunden : 88 °C.

**Vergleichsversuch 2:**

57,0 g Umsetzungsprodukt aus 2,2-Bis-(4-hydroxyphenyl)-propan und Epichlorhydrin mit einem Equivalentgewicht von 185 bis 200 (Epikote 215 der Fa. Shell) werden mit 22,5 g handelsüblichem Polyaminoamin V 114 der Fa. Shell vermischt. Die Mischung wird 4 Stunden bei 120 °C gehärtet und anschließend bei 200 °C getempert. Folgende Erweichungstemperaturen, ermittelt nach DIN 53 460 werden für das getemperte vernetzte Epoxyharz bestimmt:

| | | | | Erweichungstemperatur |
|---|---|---|---|---|
| Temperung | bei | 200 °C | 4 h: | 59 °C |
| " | " | " | 8 h: | 63 °C |
| " | " | " | 24 h: | 69 °C. |

**Beispiel 4:**

190 g Umsetzungsprodukt aus 2,2-Bis-(4-hydroxyphenyl)-propan und Epichlorhydrin mit einem Equivalentgewicht von 190 (Epikote 828 der Fa. Shell) werden mit 240 g des Organopolysiloxans, dessen Herstellung in Beispiel 1 unter a) beschrieben wurde, vermischt. Aus der Mischung werden Probekörper gegossen, die 8 Stunden bei 60 °C gehärtet werden und anschließend 1000 Stunden bei 150 °C bzw. 200 °C getempert bzw. gelagert werden. Die Shore D-Härte, bestimmt nach DIN 53 505 des getemperten, vernetzten Epoxyharzes wird bei 25 °C und 150 °C bzw. 200 °C ermittelt. Die Ergebnisse sind in der Tabelle zusammengefaßt.

**Vergleichsversuch 3:**

Die in Beispiel 4 beschriebene Arbeitsweise wird wiederholt mit der Abänderung, daß anstelle der 240 g des Organopolysiloxans, dessen Herstellung in Beispiel 1 unter a) beschrieben wurde, 270 g handelsübliches Polyaminoamid V 115 der Fa. Shell eingesetzt wird. Die Ergebnisse sind in der Tabelle zusammengefaßt.

**Vergleichsversuch 4:**

Die in Beispiel 4 beschriebene Arbeitsweise wird wiederholt mit der Abänderung, daß anstelle der 240 g des Organopolysiloxans, dessen Herstellung in Beispiel 1 unter a) beschrieben wurde, 95 g handelsübliches Polyaminoamid V 140 der Fa. Shell eingesetzt wird. Die Ergebnisse sind in der Tabelle zusammengefaßt.

Tabelle

| | Nach 1000 h Temperung bei 150 °C | | Nach 1000 h Temperung bei 200 °C | |
|---|---|---|---|---|
| | Shore D-Härte | | Shore D-Härte | |
| | bei 25 °C | bei 150 °C | bei 25 °C | bei 200 °C |
| Beispiel 4 | 76 | 60 | 77 | 71 |
| Vergleichsversuch 3 | 79 | ≪30 | 76 | ≪30 |
| Vergleichsversuch 4 | 79 | 55 | 81 | ≪30 |

Die Shore D-Härte der mit herkömmlichen Aminoamiden vernetzten Epoxyharze nimmt nach 150 °C - bzw. 200 °C - Lagerung stark ab. Während die Shore D-Härte der mit den erfindungsgemäß eingesetzten Siliciumverbindungen vernetzten Epoxyharze nahezu unverändert ist und sogar nach 200 °C-Lagerung höher ist, also zunimmt, als nach 150 °C-Lagerung.

**Ansprüche**

1. Verfahren zur Herstellung von wärmebeständigen, vernetzten Epoxyharzen, dadurch gekennzeichnet, daß Epoxyharz im wesentlichen mittels Siliciumverbindung mit über Kohlenstoff an Silicium gebundenem, basischem Stickstoff, an den mindestens 1 Wasserstoffatom direkt gebunden ist, vernetzt wird und anschließend das vernetzte Epoxyharz getempert wird.

2. Verfahren nach Anspruch 1, dadurch gekennzeichnet, daß die Temperung bei 150 °C bis 250 °C über einen Zeitraum von mindestens 2 Stunden erfolgt.

3. Verfahren nach Anspruch 1 oder 2, dadurch gekennzeichnet, daß mindestens ein Teil des zu vernetzenden Epoxyharzes aus mindestens einem Umsetzungsprodukt aus 2,2-Bis-(4-hydroxyphenyl)-propan und Epichlorhydrin besteht.

4. Verfahren nach einem der Ansprüche 1 bis 3, dadurch gekennzeichnet, daß die Siliciumverbindungen mit über Kohlenstoff an Silicium gebundenem, basischem Stickstoff Organopolysiloxane aus Einheiten der Formel

$$Y_aR_bSi(OR^1)_cO_{\frac{4-a-b-c}{2}} ,$$

worin R gleiche oder verschiedene, einwertige Kohlenwasserstoffreste mit 1 bis 8 Kohlenstoffatom(en) je Rest, $R^1$ gleiche oder verschiedene Alkylgruppen mit 1 bis 4 Kohlenstoffatom(en) je Rest und Y gleiche oder verschiedene, einwertige SiC-gebundene organische Reste mit basischem Stickstoff, an den mindestens 1 Wasserstoffatom direkt gebunden ist, bedeuten und a 0, oder 1, durchschnittlich 0,02 bis 1,0, b 0, 1, 2 oder 3, durchschnittlich 0,0 bis 2,0 und c 0, 1, 2 oder 3, durchschnittlich 0,0 bis 2,0 ist, sind.